# EUROPEAN PATENT SPECIFICATION

(11) **EP 3 844 376 B1**
(45) Date of publication and mention of the grant of the patent: **03.07.2024**
(21) Application number: 19853811.8
(22) Date of filing: 23.08.2019
(51) Int. Cl.: F02B 77/08, F02D 41/22, F02B 39/16, B60L 50/70, B60L 58/30, B60L 58/40

(54) **SAFETY CONTROL SYSTEM AND METHOD FOR FUEL-CONSUMING APPARATUS**
SYSTEM UND VERFAHREN ZUR SICHERHEITSSTEUERUNG EINER KRAFTSTOFFVERBRAUCHSVORRICHTUNG
SYSTÈME ET PROCÉDÉ DE COMMANDE DE SÉCURITÉ POUR APPAREIL CONSOMMANT UN CARBURANT

(30) Priority: 30.08.2018 US 201862724993 P
(43) Date of publication of application: 07.07.2021
(73) Proprietor: Watt Fuel Cell Corp., Mt. Pleasant, PA 15666 (US)
(72) Inventor: DEWALD, Paul, Scottdale, PA 15683 (US); GROGAN, Robert, Port Washington, NY 11050 (US)
(74) Representative: Daniels, Stefanie Lisa
(86) International application number: PCT/US2019/047878
(87) International publication number: WO 2020/046742

(56) References cited:
- EP-A1- 3 316 372
- WO-A1-2016/148681
- US-A- 2 709 335
- US-A- 4 429 670
- US-A1- 2015 015 089
- US-A1- 2016 375 778

## Description

### CROSS REFERENCE TO RELATED APPLICATION

This patent application claims the benefit of U.S. Provisional Application No. 62/724,993 filed on August 30, 2018.

### TECHNICAL FIELD

The present disclosure relates to a safety control system for controlling a fuel safety shutoff valve to ensure a safe operation of a fuel-consuming apparatus and a method of operating the safety control system.

### BACKGROUND

Since fuel consuming apparatuses such as combustion engines of vehicles or electrical generators, fuel reformers, fuel cell systems, or the like are vulnerable to fire or explosion, special cautions should be made to ensure a safe operation thereof.

To this end, safety control mechanisms for the fuel consuming apparatuses have been developed and some industries requires safety testing to ensure if the apparatuses with the safety control mechanisms are working, meeting requirements.

In one example existing art, a computer processor collects data associated with various environmental conditions of fuel consuming apparatuses, detect safety hazards based on the collected data parameters and provide control feedback signals to a fuel safety shutoff valve. However, in most cases, these schemes are based on software (e.g., program instructions) executed by the processor, which makes the control mechanism more complicated. More particularly, such software-based approaches make it harder to link a particular function with a specific part(s) of the control system, and thus if a fail occurs, identifying parts associated with the fail may not be easy, and in some aspects, the software-based control system may not be appropriate for certain safety test cases required to be run and passed in many industries. EP3316372 A1 discloses a combustion device and a fuel cell system comprising a fuel shutoff valve.

In view of the above, there is a need for a new hardwire-based safety control scheme which allows one to ease troubleshooting or safety testing.

### SUMMARY

The foregoing as well as other features and advantages of the present disclosure will be more fully understood from the following figures, description, detailed exemplary embodiments, and claims.

According to one aspect of the present disclosure, there is provided a switching assembly of a safety control system for a fuel-consuming apparatus according to claim 1.

In one embodiment, the one or more switch units are implemented with one or more electro-mechanical switches.

In one embodiment, wherein the temperature switch unit is configured to be switched on upon the temperature of the afterburner unit exceeding a preset afterburner temperature threshold.

In one embodiment, wherein when all of the switch units are switched on and the time-delay relay unit is switched on, the electrical connection path between the first and second ends is activated to provide electric power from the power source node into the fuel safety shutoff valve.

In one embodiment, wherein when all of the switch units are switched on and the time-delay relay unit is switched off, the electrical connection path between the first and second ends is activated upon the temperature switch unit being switched on and deactivated upon the temperature switch unit being switched off.

In one embodiment, wherein when all of the switch units are switched on, the time-delay relay unit is switched off and the temperature switch unit is switched on before the second time, the electrical connection path between the first and second ends remains activated without disconnection.

In one embodiment, wherein when all of the switch units are switched on, the time-delay relay unit is switched off and the temperature switch unit is switched on at a third time after the second time, the electrical connection path is deactivated during a period between the second time and the third time; and is reactivated after the third time.

In one embodiment, wherein one or more environmental units comprise an air flow amount, a pressure and a temperature.

In one embodiment, wherein a flow switch unit of the one or more switch unit includes a first electro-mechanical switch configured to be switched on or switched off based on whether an air flow rate sensed at a first location of the fuel-consuming apparatus meets a first preset requirement.

In one embodiment, wherein a pressure switch unit of the one or more switch unit includes a second electro-mechanical switch configured to be switched on or switched off based on whether a differential pressure between two separated locations of the fuel-consuming apparatus meets a second preset requirement.

In one embodiment, wherein the two separated locations correspond to inlet and outlet locations of an air blower of the fuel-consuming apparatus, respectively.

In one embodiment, wherein an over-temperature switch unit of the one or more switch unit includes a third electro-mechanical switch configured to be switched on or switched off based on whether a temperature sensed at a third location of the fuel-consuming apparatus meets a third preset requirement.

In one embodiment, wherein the third preset requirement comprises the temperature sensed at the third location being higher than a preset temperature threshold.

According to another aspect of the present disclosure, there is provided a fuel-consuming apparatus including a safety control system according to claim 1, the fuel-consuming apparatus further comprising one or more of a fuel combustion apparatus, a fuel reformer and a fuel cell system, wherein the fuel comprises a liquid fuel and a gaseous fuel.

In a non-claimed example, there is provided a safety control method for a fuel-consuming apparatus. The method includes: providing a switching assembly between a power source node and a fuel safety shutoff valve of the fuel-consuming apparatus, the switching assembly having a first end electrically connected to the power source node and a second end electrically connected to a power input node of the fuel safety shutoff valve; switching on or switching off each of one or more switch units serially connected between the first and second ends, based on a corresponding one of one or more environmental conditions of the fuel-consuming apparatus; deactivating an electrical connection path between the first and second ends upon at least one of the one or more switch units being switched off; and stopping supplying of fuel into the fuel-consuming apparatus from a fuel storage upon the electrical connection between the first and second ends being deactivated.

In a non-claimed example, in the method the one or more switch units are implemented with one or more electro-mechanical switches.

In a non-claimed example, the method further includes: providing a time-delay relay unit to be serially connected to one of the one or more switch units, the time-delay relay unit being configured to be switched on during a predetermined time period from a first time to a second time and configured to be switched off after the second time; and providing a temperature switch unit to be serially connected to said one of the one or more switch units and connected in parallel to the time-delay relay unit, the temperature switch unit being configured switched on or switched off based on a temperature of an afterburner unit of the fuel-consuming apparatus.

In a non-claimed example, the method further includes switching on the temperature switch unit upon the temperature of the afterburner unit exceeding a preset afterburner temperature threshold.

In a non-claimed example, the method further includes: when all of the switch units are switched on and the time-delay relay unit is switched on, activating the electrical connection path between the first and second ends; and providing electric power from the power source node into the fuel safety shutoff valve upon the electrical connection being activated.

In a non-claimed example, the method further includes: when all of the switch units are switched on and the time-delay relay unit is switched off, activating the electrical connection path between the first and second ends upon the temperature switch unit being switched on and deactivating the electrical connection upon the temperature switch unit being switched off.

In a non-claimed example, the method further includes: when all of the switch units are switched on, the time-delay relay unit is switched off and the temperature switch unit is switched on before the second time, remaining activation of the electrical connection path without disconnection.

In a non-claimed example, the method further includes: when all of the switch units are switched on, the time-delay relay unit is switched off and the temperature switch unit is switched on at a third time after the second time, deactivating the electrical connection path during a period between the second time and the third time and reactivating the electrical connection after the third time.

### BRIEF DESCRIPTION OF THE DRAWINGS

It should be understood that the drawings described below are for illustration purposes only. The drawings are not necessarily to scale, with emphasis generally being placed upon illustrating the principles of the present disclosure. The drawings are not intended to limit the scope of the present disclosure in any way. Like numerals generally refer to like parts.
FIG. 1 is a block diagram of an example safety control system illustrated in conjunction with a fuel-consuming apparatus according to an embodiment of the present disclosure;
FIG. 2A is a top elevation view of an example fuel cell system according to an embodiment of the present disclosure;
FIG. 2B is a block diagram of an example cell system illustrated in conjunction with a switching assembly of a safety control system according to an embodiment of the present disclosure;
FIG. 3 is a block diagram of an example safety control system according to an embodiment of the present disclosure;
FIG. 4A is a timing diagram of the afterburner temperature switch unit and the time-delay relay unit of FIG. 3 according to an embodiment of the present disclosure;
FIG. 4B is a timing diagram of the afterburner temperature switch unit and the time-delay relay unit of FIG. 3 according to an embodiment of the present disclosure;
FIG. 5 is a diagram illustrating example feedback signals provided from various nodes of the switching assembly of FIG. 3, according to an embodiment of the present disclosure; and
FIG. 6 is a flowchart illustrating a safety control method according to an embodiment of the present disclosure.

### DETAILED DESCRIPTION OF THE EMBODIMENTS

It now has been discovered that the safety control system in accordance with present disclosure takes advantages of hardwire-based switching mechanism to provide a more reliable and intuitive control means for a fuel-consuming apparatus.

The term "fuel-consuming apparatus" used herein refers to any apparatus operating based on any kinds of fuels.

By way of examples only, the fuel-consuming apparatus may include, but are not limited to: combustion engines, or all kinds of apparatuses including the combustion engine(s) such as vehicles, electric generators, etc.; and fuel cell reformers that produces fuel cells based on fuels supplied thereto.

For the sake of description, the present disclosure will be described with reference to the fuel cell reformer as an example of the fuel-consuming apparatus, however the scope or exemplary embodiments of the present disclosure are not limited thereto.

Unlike the existing safety control schemes which employ a computer processor that collects sensed data from a fuel-consuming apparatus, process the data to detect safety hazards based on the collected data parameters and provide control feedback signals to a fuel safety shutoff valve of the fuel-consuming apparatus based on software (or program codes) executed by the processor, which makes it harder to troubleshoot or to pass safety testing required by many industries.

On the contrary, the hardwire-based safety control system in accordance with the present disclosure employs electro-mechanical switches which each are adapted to be open or closed directly based on environmental data or conditions sensed from various locations of the fuel-consuming apparatus, allowing one identify responsible parts to particular operations of the safety control system to make it easier to troubleshooting in case of occurrence of fail during operation and perform the safety testing.

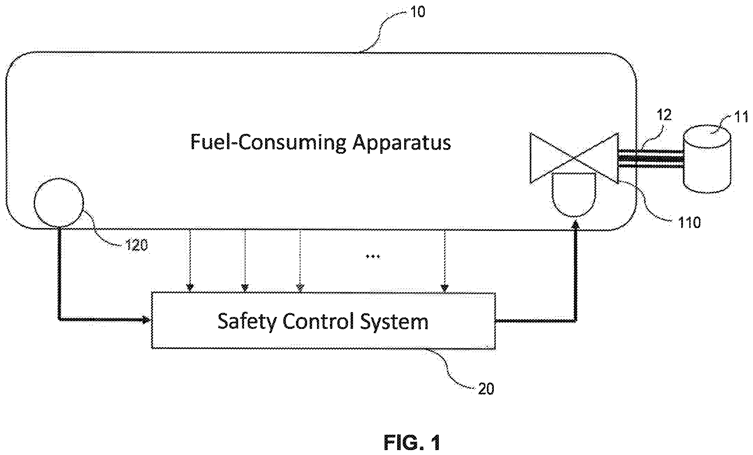

The safety control system in accordance with the present disclosure provides a switching mechanism of electric power to be supplied to a fuel safety shutoff valve of a fuel-consuming apparatus. For example, as illustrated in FIG. 1, the safety control system 20 includes a switching assembly 21a between a power source node 120 and a fuel safety shutoff valve 1 10. When the switching assembly 21a is switched on, the power source node 120 is electrically connected to the fuel safety shutoff valve 110, so that the power can be supplied into the fuel safety shutoff valve 110 from the power source node 120. However, when the switching assembly 21a is switched off, the power source node 120 is electrically disconnected from the fuel safety shutoff valve 110, so that the power cannot be supplied into the fuel safety shutoff valve 110 from the power source node 120.

The term "switched on" used herein may refer to an operation that a switch system, a switch unit, a switch, or the like is "closed" to activate an electrical connection between both end nodes thereof, so that electric power can flow through the electrical connection. In addition, the term "switched off" used herein may refer to an operation that the switch system, the switch unit, the switch, or the like is "open" to deactivate an electrical connection between both end nodes thereof, so that no electric power can flow through the electrical connection. Therefore, throughout the present disclosure, the term "switched on" and "closed" are interchangeable, and the term "switched off" and "open" are interchangeable.

The safety control system 20 is configured to be switched off to stop supplying of the fuel from a fuel storage 11 into the fuel-consuming apparatus 10 by closing a control valve of the fuel safety shutoff valve 110, in case of detections of safety hazard conditions.

Whether the switching assembly 21a to be switched on or switched off depends on one or more environmental conditions of the fuel-consuming apparatus 1 0. In other words, the fuel safety shutoff valve 110 will be controlled to be open or closed depending on the one or more environmental conditions of the fuel-consuming apparatus 10. In one embodiment, the environmental conditions may include safety-related conditions such as an air flow amount, a pressure, a temperature, etc.

Thus, the fuel safety shutoff valve 110 is shut off if the one or more of the environmental conditions do not meet corresponding preset requirements, so that the fuel-consuming apparatus 10 can be protected from being caught fire, exploded, or the like.

In one embodiment, the one or more switch units may be implemented using electro-mechanical switches. The electro-mechanical switches are deployed within or in the vicinity of the fuel-consuming apparatus 10 to sense the environmental conditions directly therefrom, and switched on or off based on the sensed results. These features of the present disclosure are distinguishable from the existing art where the fuel safety shutoff valve is controlled based on software or program codes executed by a computer processor. In particular, in the existing art, a controller including a processor is employed to receive data regarding the environmental conditions and provide control feedback signals to the fuel safety shutoff valve, which makes the control mechanism more complicate. Moreover, such software-based approaches make it harder to link a particular function with a specific part(s) of the control system, and thus if a fail occurs, identifying parts associated with the fail may not be easy, and in some aspects, the software-based control system may not be appropriate for certain safety test cases required to be passed in many industries.

On the contrary, the safety control scheme based on the electro-mechanical switches in accordance with the present disclosure provides more direct, efficient, simpler interfaces to shut off the fuel supply into the fuel-consuming apparatus 10, thus making it easier to troubleshooting or safety testing.

It is to be understood that the present disclosure herein is not limited to the particular procedures, materials, and modifications described and as such can vary. It is also to be understood that the terminology used is for purposes of describing particular embodiments only and is not intended to limit the scope of the present disclosure, which will be limited only by the appended claims.

In the present disclosure, where an element or component is said to be included in, at least one of the recited element or and/or selected from a list of recited elements or components, it should be understood that the element or component can be any one of the recited elements or components, or the element or component can be selected from a group consisting of two or more of the recited elements or components. Further, it should be understood that elements and/or features of a composition, an apparatus, or a method described herein can be combined in a variety of ways without departing from the focus and scope of the present disclosure, whether explicit or implicit herein. For example, where reference is made to a particular structure, that structure can be used in various embodiments of apparatus of the present disclosure and/or in methods of the present disclosure.

The use of the terms "include," "includes," "including," "have," "has," "having," "contain," "contains," or "containing," including grammatical equivalents thereof, should be generally understood as open-ended and non-limiting, for example, not excluding additional unrecited elements or steps, unless otherwise specifically stated or understood from the context.

The use of the singular herein, for example, "a," "an," and "the," includes the plural (and vice versa) unless specifically stated otherwise.

It should be understood that the order of steps or order for performing certain actions is immaterial so long as the present disclosure remain operable. For example, the methods described herein can be performed in any suitable order unless otherwise indicated herein or otherwise clearly contradicted by context. Moreover, two or more steps or actions can be conducted simultaneously.

The use of any and all examples, or exemplary language provided herein, for example, "such as," is intended merely to better illuminate the present disclosure and does not pose a limitation on the scope of the invention unless claimed. No language in the specification should be construed as indicating any non-claimed element as essential to the practice of the present disclosure.

The expression "fuel" shall be understood to include any kinds of liquid fuels and gaseous fuels.

Further, the expression "liquid fuel" shall be understood to include a fuel in a liquid state at standard temperature and pressure (STP) conditions, for example, methanol, ethanol, naphtha, distillate, gasoline, kerosene, jet fuel, diesel, biodiesel, and the like. The expression "liquid fuel" shall be further understood to include such fuels whether they are in the liquid state or in the gaseous state, i.e., a vapor.

Still further, the expression "gases fuel" shall be understood to include a fuel in a gas at STP conditions, for example, methane, ethane, propane, butane, isobutane, ethylene, propylene, butylene, isobutylene, dimethyl ether, their mixtures, such as natural gas and LNG, which are mainly methane, and petroleum gas and LPG, which are mainly propane or butane but include all mixtures made up primarily of propane and butane, and the like. The gaseous fuel also includes ammonia, which like other gaseous fuels, can be stored as a liquid.

Exemplary embodiments where a safety control system in accordance with the present disclosure is applied for controlling a fuel reformer or a fuel cell system including the fuel reformer will be described hereinafter.

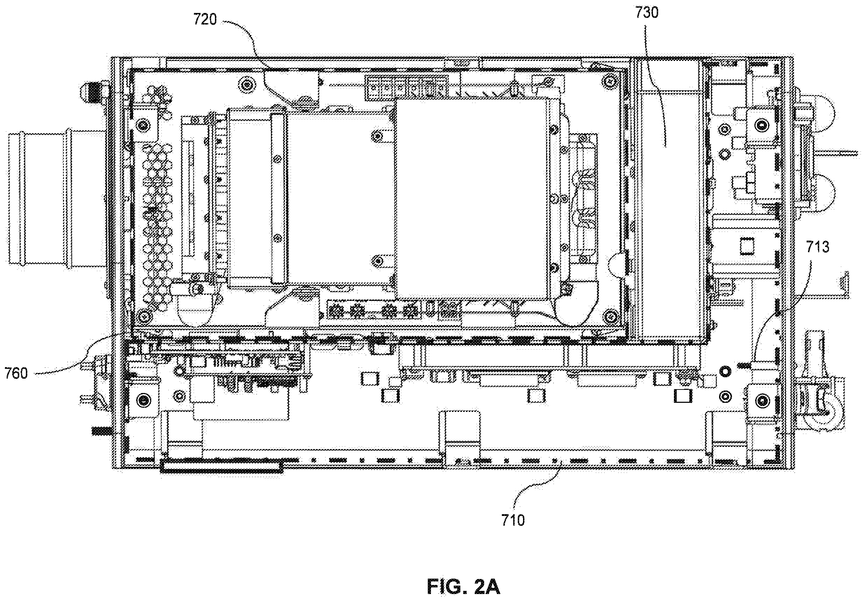

Referring now to FIG. 2A, illustrated is a top elevation view of a fuel cell system illustrated as an example of the fuel-consuming apparatus 10a according to an embodiment of the present disclosure. The example fuel cell system of FIG. 2A is also described in Applicant's Provisional Application No. 62/724,983 filed on August 30, 2018.

Referring to FIG. 2A, the fuel cell system may include two thermal zones 710 and 720 enclosed by a housing box. The two thermal zones 710 and 720 may be separated through an air blower 730 and a thermal insulation wall 760, such that there is no air or gas communication except through the air blower 730. The blower 730 may be configured to provide a forced air flow from the zone 710 to the zone 720 where a fuel cell stack 173 and other balance-of-plant (BOP) components such as a fuel reformer, chemical reactors, gaskets, pumps, heat exchangers, afterburner, air blowers, reactant conduits or the like are located.

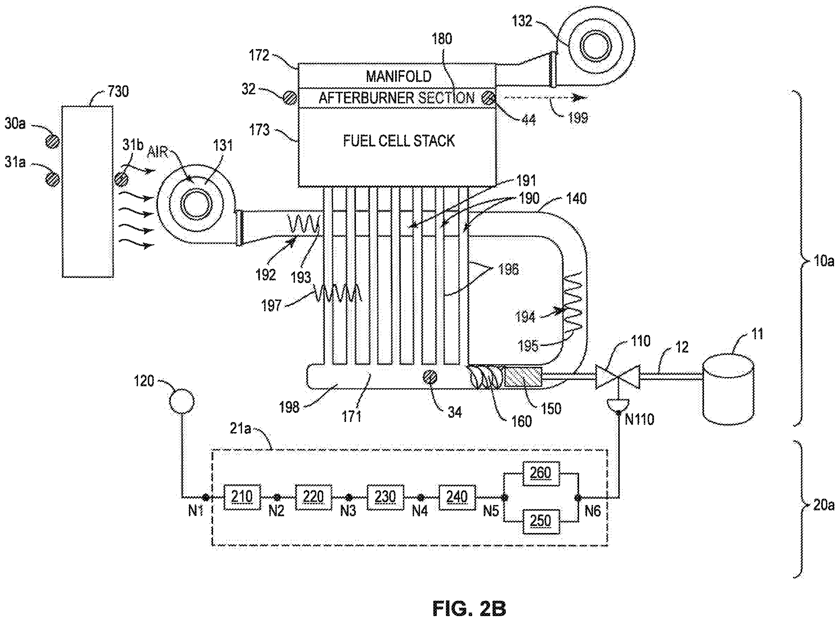

Referring now to FIG. 2B, an example fuel cell system 10a is illustrated in conjunction with a switching assembly 21a of a safety control system 20a according to an embodiment of the present disclosure. As shown in FIG. 2B, the fuel cell system 10a refers, but does not necessarily to, at least one of catalytic partial oxidation (CPOX) reformer-based fuel cell systems disclosed in the U.S. Patent Nos. 9,627,700 and 9,627,701. The fuel cell system 10a includes an air blower 131 that receives the air provided from the air blower 730 and introduces oxygen-containing gas, exemplified here and in the other embodiments of the present disclosure by air, into a conduit 140, and for driving this and other gaseous streams (inclusive of gaseous fuel-air mixture(s) and hydrogen-rich reformates) through the various passageways, including open gaseous flow passageways, of a fuel reformer section of the fuel cell system 10a. In one embodiment, the air blower 131 can be used to provide CPOX air for being mixed with fuel, or for diluting fuel to satisfy a safety system requirement (e.g., LEL < 0.25 % for propane as fuel). In other embodiments, a separate blower (not shown) other than the air blower 131 can be used as a dilution blower.

The fuel cell system 10a may include a plurality of micro electro-mechanical switches or at least a portion (e.g., sensing parts) thereof at locations, e.g., 30a, 31a, 31b, 32, 34, and 44 for measuring or monitoring the aforementioned environmental conditions.

In a start-up mode of operation of the exemplary fuel reformer section of the fuel cell system 10a, air is introduced by the air blower 131 into the conduit 140 for being mixed with fuel as explained in the U.S. Patent Nos. 9,627,700 and 9,627,701, or for diluting the fuel and passes through a first heating zone 192, where the air is initially heated by a first heater 193 to within a preset, or targeted, first range of elevated temperature at a given rate of flow. The initially heated air then passes through a heat transfer zone 191 which is, in the steady-state mode, heated by heat of exotherm recovered from the CPOX reaction occurring within CPOX reaction zones 1 90 of tubular CPOX reactor units 196.

Once such steady-state operation of the fuel reformer section is achieved, e.g., upon the CPOX reaction within the CPOX reactor units 196 becoming self-sustaining, the thermal output of the first heater 193 can be reduced or its operation discontinued since the incoming air will have already been heated by a passage through the heat transfer zone 191 to within, or approaching, its first range of elevated temperature.

Continuing further downstream within the conduit 140, the heated air passes through a second heating zone 194 where it is further heated by a second heater 195 to within a second range of elevated temperature. The heater 195 can operate to top-off the temperature of the previously heated air, thereby satisfying several operational requirements of the fuel cell system 10a, namely, assisting in the regulation and fine-tuning of the thermal requirements of the fuel cell system 10a on a rapid response and as-needed basis.

The fuel is introduced via a pump through a fuel line 12 into the conduit 140 where the fuel is vaporized by a vaporizer system 150 utilizing the heat from the heated air flowing from the second heating zone 194. The vaporized fuel is combined with the stream of heated air in a mixing zone 160 in which an in-line mixer is disposed in order to provide a more uniform fuel-air gaseous CPOX reaction mixture.

The heated vaporized fuel-air mixture (e.g., heated gaseous CPOX reaction mixture) enters a manifold, or plenum 171 which functions to distribute the reaction mixture more evenly and, for example, at a more uniform temperature, into the tubular CPOX reactor units 196.

From the manifold 171, the heated CPOX reaction mixture is introduced into the tubular CPOX reactor units 196. In a start-up mode of operation of the fuel reformer section, an igniter 197 initiates the CPOX reaction of the CPOX reaction mixture within the CPOX reaction zones 190 of the tubular CPOX reactor units 196, thereby commencing the production of hydrogen-rich reformate. Once steady-state CPOX reaction temperatures have been achieved (e.g., 250 °C to 1,100 °C), the reaction becomes self-sustaining and operation of the igniter 197 can be discontinued.

The fuel cell system 10a includes an electric power source unit (not shown) electrically connected to a power source node 120 to provide electric power to various electrically driven components of the fuel cell system 10a and/or the safety control system 20a such as the air blower 131, the heaters 193, 195 and 198, the fuel safety shutoff valve 110, the igniter 197, and various switch units 210 to 260.

As further shown in FIG. 2B, the hydrogen-rich reformate driven by the air blower 131 passes from the CPOX reactor units 196 into a fuel cell stack 173 where the hydrogen and oxygen-containing gas introduced by an air blower 132 into a manifold 172 and thereafter into the fuel cell stack 173 undergo electrochemical conversion to electricity. Combustible gas(es), for example, hydrocarbon(s), unconsumed hydrogen, and the like, contained in the spent gas(es) resulting from such electrochemical conversion can be made to undergo combustion in an afterburner unit 180. Heat resulting from the combustion taking place in the afterburner unit 180 can be recovered, if desired, and utilized for the operation of the fuel reformer section, for example, to preheat oxygen-containing gas and/or fuel during a steady-state mode of operation of the fuel reformer section. The air blower 132 may be used to provide cathode air via the manifold 172 and passageways (not shown) to the cathode side of the fuel cell stack 173.

The safety control system 20a as shown in FIG. 2B may be disposed within the fuel cell system 10a or in the vicinity thereof. In one embodiment, the safety control system 20a includes a switching assembly 21a for controlling an electrical connection between an electrical power source node 120 and the fuel safety shutoff valve 1 10, or any other devices capable of controlling fuel flowing into the fuel reformer section of the fuel cell system 10a. In an example illustrated in FIG. 2B, the switching assembly 21a includes a plurality of switch units 210 to 240 serially connected one to another. One end of the switch unit 210 is connected to the power source node 120 through a node N1. Another end of the switch unit 240 is serially connected to one end of a time-delay relay unit 250. The time-delay relay unit 250 is connected in parallel with a temperature switch unit 260.

In one embodiment, whether the switching assembly 21a is switched on or off based on whether one or more environmental conditions sensed within or in the vicinity of the fuel cell system 10a. The one or more environmental conditions are associated with an amount of air flow, a pressure, a temperature, etc. By way of example only, when the switching assembly 21a is switched on, the fuel safety shutoff valve 110 is powered by the power source node 120 to supply the fuel into the fuel cell system 10a from the fuel storage 11. In addition, when the switching assembly 21a is switched off upon a detection of safety hazard conditions within the fuel cell system 10a, the fuel safety shutoff valve 110 is not powered by the power source node 120 to stop supplying of the fuel into the fuel cell system 10a to ensure the safe operation thereof.

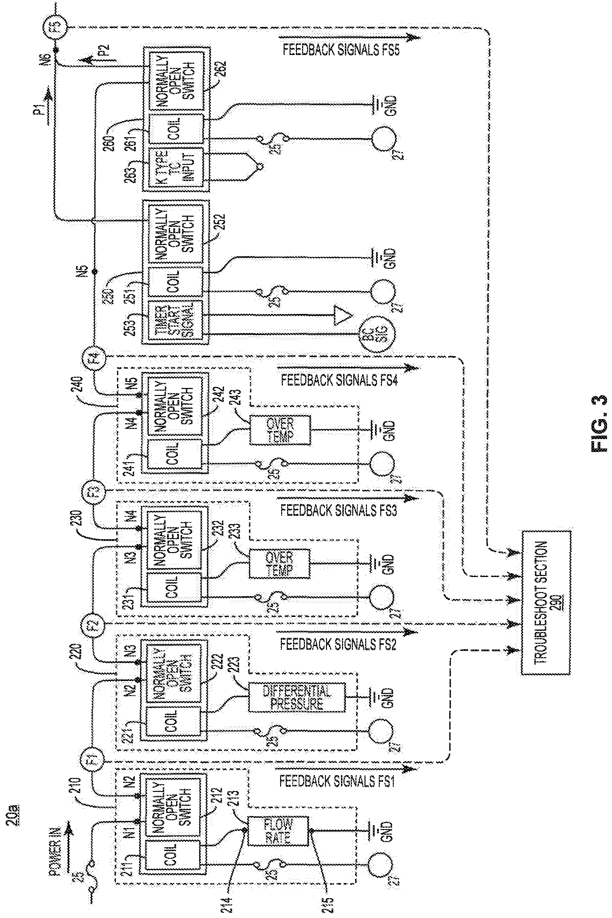

Referring further to FIGS. 2 and 3, the switching assembly 21a may include a flow switch unit 210. The switching operation (e.g., switching on or switching off) of the flow switch unit 210 is performed based on whether a sufficient amount of dilution air flows into the fuel cell system 10a, e.g., conduit 140. In one embodiment, whether the sufficient amount of dilution air flow into the conduit 140 is evaluated, for example, by monitoring an air flow rate (or an air flow velocity) at a certain location (e.g., an inlet side 30aof the air blower 730).

Referring further to FIG. 3, the flow switch unit 210 is configured to be switched on or off based on whether an air flow rate sensed at a certain location (e.g., 30a of FIG. 2B) of the fuel cell system 10a is equal to or more than a preset air flow rate threshold. The flow switch unit 210 is configured to be switched off when the sensed air flow rate is less than the preset air flow rate threshold. For example, the preset air flow rate threshold is set to ensure a sufficient amount of dilution air is provided into the fuel cell system 10a to satisfy the system safety requirement (e.g., an LEL for fuel (propane) > 0.25 %) and/or ensure complete catalytic combustion. In a particular example where a part of the fuel cell system 10a is a passive orifice that limits a 100 % of full ventilation, a maximum inlet pressure of the fuel cell system 10a may be 14 inWC. at which the propane flow rate cannot exceed about 2 L/m. Thus, in this case, given the 2 L/m of propane flow rate, the minimum dilution air flow rate for satisfying the LEL of 0.25 % may be about 800 L/m, i.e., about 28 CFM, and thus, the preset air flow threshold can be set as 28 CFM. For more safety operation, the preset air flow rate can be set higher, e.g., 40 CFM. However, the preset air flow rate threshold may vary according to a specific design of a fuel-consuming apparatus.

In one embodiment, the flow switch unit 210 can be implemented using a relay coil 212, a normally open switch 212, and a flow rate switch 213. The relay coil 212 has one terminal node 214 connected to a DC power 27 (e.g., 12 V) and another terminal node 215 connected to a ground GND through the flow rate switch 213. The normally open switch 212 is a mechanical switch that remains open normally, and turns to be switched on (e.g., closed) upon electric current flowing through the relay coil 211, so as to engage a connection between terminal nodes N1 and N2.

For example, upon the flow rate switch 213 being switched on, electric current flows through both terminal nodes of the relay coil 211 to generate magnetic field therearound and force the normally open switch 212 to be closed, so the whole flow switch unit 210 will be switched on. If the flow rate switch 213 is open, no current flows through the relay coil 211 and thus the normally open switch 212 will remain open.

In one embodiment, the flow rate switch 213 can be implemented using a flap-type flow meter or flapper (e.g., 713 of FIG. 2A) that measures an air amount (or air flow rate) flowing through a specific location (e.g., 30a of FIG. 2B) of the fuel cell system 10a. If the air flow amount is equal to or more than a preset air flow rate threshold, the flow rate switch 213 based on the flap-type flow meter is configured to snap one contact (not shown) connected to one terminal end node 214 to another contact (not shown) connected to another terminal end node 215, so as to switch on an electrical connection between the both terminal end nodes 214 and 215 thereof. In addition, if the air flow rate is less than the preset air flow rate threshold, the flow rate switch 213 is configured to be switched off the electrical connection between the terminal end nodes 214 and 215.

Although only the flow switch unit 210 is illustrated in FIG. 3A, embodiments of the present disclosure are not limited thereto. In one aspect, the safety control system 20a may further include one or more flow switch units, each of which is serially connected between the switch units 210 to 250. Each of the optional flow switch units may be switched on or off based on an air flow rate at a location other than the location 30a to ensure that an appropriate amount of CPOX air flows into the CPOX reactor unit 196, and/or an appropriate amount of cathode air flows into the fuel cell stack 173. For example, one optional flow switch unit can be configured to measure an air flow rate at a location adjacent to the air blower 131 (e.g., inlet or outlet side of the air blower 131) and/or any locations in the conduit 140 and switched on or off based on the measured flow rate to ensure that the appropriate amount of CPOX air flows into the CPOX reactor unit 196, and/or another optional flow switch unit can be measured an air flow rate at a location adjacent to the air blower 132 (e.g., inlet or outlet side of the air blower 132) and/or any locations in the passageways at the cathode side of the fuel cell stack 173 to ensure that the appropriate amount of the cathode air flows into the fuel cell stack 173.

In addition, referring further to FIG. 3, the switching assembly 21a may include a pressure switch unit 220 checking if there is a substantial pressure change such as an abnormal pressure drop or rise. In particular, the abnormal pressure drop can take place as a result of a leak from the fuel cell system 10a, in more particularly, e.g., the zone 720 of FIG. 2A where the fuel cell stack 173 and other BOP components are located. The pressure switch unit 220 may be designed to ensure the box cover of the fuel cell system 10a being in place based on a pressure sensed at various locations. In one example, in order to protect the fuel cell system 10a from a situation where it leaks fuel and/or dilution air, the pressure switch unit 220 is configured to be switched off upon a differential pressure value (e.g., abnormal pressure drop) between separated locations (e.g., 31a and 31b) within or in the vicinity of the fuel cell system 10a being more than a preset differential pressure threshold. Here, the locations 31a and 31b may correspond to inlet and outlet sides of the air blower 730, and thus, as the air blower 730 runs, a pressure at the location 31b may get higher (e.g., positive differential pressure +ΔP) and a pressure at the location 31a may get lower (e.g., negative differential pressure -ΔP or vacuum). In addition, the pressure switch unit 220 is configured to be switched on if the sensed differential pressure value is less than the preset differential pressure threshold.

In one embodiment, the pressure switch unit 220 can be implemented using a relay coil 221, a normally open switch 222, and a differential pressure switch 223.

The pressure switch unit 220 has substantially the same or approximate to the flow switch unit 210 except for the use of the differential pressure switch 223. Thus, duplicate description thereof will be omitted for the sake of simplicity.

In one embodiment, the differential pressure switch 223 may be implemented using a sensor measuring a difference between two pressures sensed from two different locations within or in the vicinity of the fuel cell system 10a. One (e.g., 31a of FIG. 2B) of the locations may be an inlet side of the air blower 730 and another (31b of FIG. 2B) one may be an outlet side thereof, the differential pressure may correspond to a different pressure between the zones 710 and 720. Measured differential pressure is compared with a corresponding preset differential pressure threshold, as discussed above. If the differential pressure is equal to or more than the preset differential pressure threshold, the differential switch 223 is switched off and the whole pressure switch unit 220 will be switched off. For example, the preset differential pressure threshold may be about 0.25 to 0.3 in WC according to one design example of the fuel cell system 10a. However, an optimal differential pressure indicating that the box cover for the zone 720 is in place to keep the dilution therein may vary depending on a housing box design thereof, and the preset differential pressure threshold may vary accordingly.

Although only the pressure switch unit 220 is illustrated in FIG. 3A, embodiments of the present disclosure are not limited thereto. In one aspect, the safety control system 20a may further include one or more pressure switch units, each of which is serially connected between the switch units 210 to 250. Each of the optional pressure switch units may be switched on or off based on a different pressure at a pair of two locations other than the locations 31a and 31b to ensure that an appropriate amount of the CPOX air is present in the CPOX reactor unit 196, and/or an appropriate amount of the cathode air is present in passageways (not shown) to the cathode side of the fuel cell stack 173. For example, one optional pressure switch unit can be configured to measure a differential pressure at locations adjacent to the air blower 131 (e.g., a differential pressure between inlet and outlet sides of the air blower 131) and/or any locations in the conduit 140 and switched on or off based on the measured differential pressure to ensure that the appropriate amount of CPOX air is present, and/or another optional pressure switch unit can be configured to measure a differential pressure at locations adjacent to the air blower 132 (e.g., a differential pressure between inlet and outlet sides of the air blower 132) and/or any locations in the passageways at the cathode side of the fuel cell stack 173 to ensure that the appropriate amount of cathode air is present.

In addition, referring further to FIG. 3, the switching assembly 21a may include one or more over-temperature switch units 230 and 240 to protect the fuel cell system 10a from being overheated. Each of the over-temperature switch units 230 and 240 is configured to be switched off upon a temperature at a certain location (e.g., 34 or 44 of FIG. 2B) within or in the vicinity of the fuel cell system 10a being higher than a preset temperature threshold. In addition, each of the pressure switch units 230 and 240 is configured to be switched on if the sensed temperature is equal to or lower than the preset temperature threshold.

In one embodiment, the over-temperature switch unit 230 can be implemented using a relay coil 231, a normally open switch 232, and an over-temperature switch 233.

The over-temperature switch unit 230 has substantially the same or approximate to the flow switch unit 210 except for the use of the over-temperature switch 233. Thus, duplicate description thereof will be omitted for the sake of simplicity.

The over-temperature switch 233 may be configured to be open or closed depending on a temperature sensed at a certain location (e.g., 34 or 44 of FIG. 2B). Upon whether the over-temperature switch 233 being open or closed, the whole over-temperature switch unit 230 will be switched off or on.

In one embodiment, the over-temperature switch 233 may be a bimetallic switch designed to be open upon a sensed temperature is equal to or higher than a preset temperature threshold (e.g., 90 °C) and to be closed when the temperature drops below the preset temperature threshold. Exemplary embodiments of the present disclosure are not limited thereto. For example, the preset temperature threshold may vary according to a design of the fuel cell system 10a, but it should not reach an autoignition temperature of a flammable mixture in the fuel cell system 10a. For example, the over-temperature switch can be replaced with any equivalent or similar in functionality, such as thermocouple-based switches, a thermal fuse, or the like. In particular, the thermal fuse can be used in some circumstances requiring non-resetting functionality which is advantageous in terms of cost.

The over-temperature switch unit 240 has substantially the same or approximate to the over-temperature switch unit 230. Thus, duplicate description thereof will be omitted for the sake of simplicity.

It is noted that the number of the over-temperature switch units of the present disclosure is not limited to what is illustrated in FIG. 3; for example, only a single over-temperature switch unit 230 can be used, or three or more over-temperature switch units can be used.

In addition, referring further to FIG. 3, the switching assembly 21a may include a time-delay relay unit 250 and a temperature switch unit 260 (or afterburner temperature switch unit) which are connected in parallel with each other. This exemplary configuration of the time-delay relay unit 250 and the temperature switch unit 260 are provided to ensure that the fuel safety shutoff valve 110 is shut off if a temperature of the afterburner unit 180 drops below a preset afterburner temperature threshold, so as to prevent emission of undesired materials such as combustible gas(es), for example, hydrocarbon(s), unconsumed hydrogen, and the like.

Further to what are described with reference to FIG. 2, the afterburner unit 180 may be configured to directly burn the undesired materials with excess air at a certain temperature, or may include a catalytic bed (not shown) for catalytically oxidizing or burning the undesired materials with excess air.

The temperature switch unit 260 is configured to be switched off upon the temperature of the afterburner unit 180 or the temperature of the afterburner catalytic bed is equal to or less than an auto-ignition temperature threshold, and otherwise, the temperature switch unit 260 is configured to be switched on. The time-delay relay unit 250 is configured to be switched on for a preset time period after the fuel cell system 10a is powered on and switched off after the preset time period expires.

If all the preceding switch units 210 to 240 of FIG. 3 are switched on, the time-delay relay unit 250 provides a temporary electrical connection path to allow the electrical power from the power source node 120 to be supplied to the fuel safety shutoff valve 110 while the temperature of the afterburner unit 180 does not reach the auto-ignition temperature threshold and the temperature switch unit 260 remains open.

The temperature switch unit 260 and the time-delay relay unit 250 constitutes an afterburner switch section.

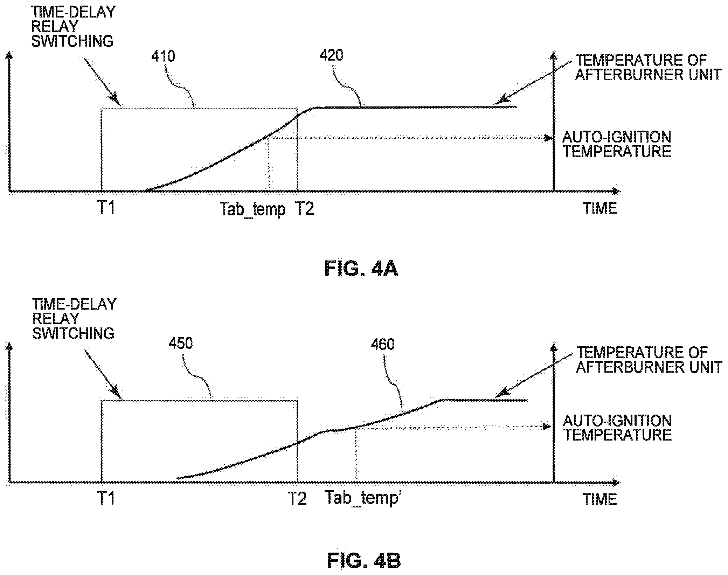

For example, as exemplary illustrated in FIGS. 3 and 4A, the time-delay relay unit 250 is switched on to activate the temporary path P1 between the terminal nodes N5 and N6 for a time period from T1 to T2 (see 410 of FIG. 4A). In this case, if the temperature of the afterburner unit 180 gradually rises above the auto-ignition temperature threshold at a time Tab_temp before T2 at which the time-delay relay unit 250 is switched off (see 420 of FIG. 4A), the temperature switch unit 260 becomes switched on at Tab_temp (see 420 of FIG. 4A) and activates an electrical connection path P2 between the terminal nodes N5 and N6. In other words, during the period from T1 to Tab_temp, the path P1 across the time-delay relay unit 250 is activated. During the period from Tab_temp to T2, the parallel paths P1 and P2 are activated between the terminal nodes N5 and N6. During the period after T2, the time-delay relay unit 250 becomes switched off and thus only the path P2 is activated between the terminal nodes N5 and N6. In this case, the path P2 becomes a primary path for supplying the power to the fuel safety shutoff valve 110.

In addition, as exemplary illustrated in FIG. 4B, if the temperature of the afterburner unit 180 does not reach the auto-ignition temperature threshold during the time period T1 to T2 (see 460 of FIG. 4B), none of the paths P1 and P2 is activated until the temperature of the afterburner unit 180 reaches the auto-ignition temperature threshold (e.g., 455 °C for propane; 246 °C ~ 280 °C for gasoline; 336 °C for Gas oil; and 500 °C for Hydrogen) at a time Tab_temp' to make the temperature switch unit 260 to be switched on. No power is supplied to the fuel safety shutoff valve 110 during the period from T2 to Tab_temp' to shut off the fuel flowing into the fuel cell system 10a.

It shall be appreciated that the above-mentioned switching configuration and functions provide a mechanism for supplying fuel into the fuel cell system 10a during a transient time from T1 to T2 until the afterburner unit 180 reaches a condition to able to take care of (e.g., burn) the undesired materials. Referring back to FIG. 4B, in case of the temperature of the afterburner unit 180 failing to reach the auto-ignition temperature before T2, the afterburner switch section is operated to cut off the power to the fuel safety shutoff valve 110 to prevent the undesired materials 199 from being emitted from the fuel cell system 10a until the temperature switch unit 260 is switched on at Tab_temp'.

Referring back to FIG. 3, the time-delay relay unit 250 may include a relay coil 251 and a normally open switch 252 of which configurations and functions are substantially the same or approximate to those of the flow switch unit 220 except for the use of a timer start signal generation portion 253 for providing the time delay function. Duplicate descriptions thereof will be omitted for the sake of simplicity. Once the fuel cell system 10a is powered, the timer start signal generation portion 253 may generate a start signal for a preset time period (e.g., see T1 to T2 of FIG. 4A) which is set by e.g., a fixed resistor, so it is not adjustable. Upon receiving the start signal during the period P1 to P2, the relay coil 251 may be powered to close the normally open switch 252, so as to activate the electrical connection path P1. Upon expiration of the timer start signal after P2, the relay coil 251 is not powered to make the normally open switch 252 remain open and thus deactivate the electrical connection path P1.

Referring still to FIG. 3, the temperature switch unit 260 may include a relay coil 261 and a normally open switch 262 of which configurations and functions are substantially the same or approximate to the flow switch unit 220 except for the use of a thermo-couple (TC) device 263. Duplicate descriptions thereof will be omitted for the sake of simplicity. The temperature switch unit 260 may use an output voltage of the TC device 263 as an input to control the switch on or off operations thereof. The TC device 263 (e.g., K-type TC) may be configured to sense a temperature around or inside the afterburner unit 180 and output a voltage depending on the sensed temperature level. Any type of temperature measuring devices that could survive up to a high temperature (e.g., 1200 °C) may replace the TC device 263.

The relay coil 261 may be powered when the voltage outputted from the TC device 263 exceeds a preset voltage threshold to close the normally open switch 262, so as to activate the electrical connection path P2. When the voltage outputted from the TC device 263 is less than the preset voltage threshold, the relay coil 261 may insufficiently be powered, so as to open the normally open switch 262 and deactivate the electrical connection path P2.

For example, the temperature switch unit 260 may be configured to be switched on when the TC device-measured temperature is higher than a preset temperature threshold. If the TC device 263 measures the temperature inside the afterburner unit 180, the TC device-measured temperature may correspond to an internal temperature of the afterburner unit 180, and thus, the preset temperature threshold may be set equal to or greater than an ignition temperature (e.g., 455 °C for propane) of the afterburner unit 180. If the TC device measures a temperature around the afterburner unit 180, the TC device-measured temperature may be lower than the internal temperature of the afterburner unit 180; for example, for the propane, the TC device-measured temperature will be 250 °C degree when the internal temperature of the afterburner unit 180 reaches an ignition temperature (e.g., 455 °C), and thus, the temperature switch unit 260 may be configured to switched on when the TC device-measured temperature is equal to or higher than 250 °C (e.g., the preset temperature threshold is 250 °C for propane).

It is noted that the switches 213, 223, 233, 243 and 263 each includes a sensing part (not shown) and a switching part (not shown), where, in an example, the sensing part is separated deployed at certain locations of interest (e.g., 30a, 31a, 31b, 32, 34, and 44 of FIG. 2B) within or in the vicinity of the fuel cell system 10a, and the switching part is separately assembled to the switching assembly 21a; in another example, a switch can be deployed as a whole within or in the vicinity of the fuel cell system 10a.

It is further noted that an arranged order of the switch units 210 to 240 and the afterburner switch section including the temperature switch unit 260 and the time-delay relay unit 250 of FIG. 3 are only illustrated as an example. They can be arranged and connected in an arbitrary order other than what is illustrated in FIG. 3.

Referring further to FIG. 3, when all the switch units 210 to 240 and either one of the temperature switch unit 260 or the time-delay relay unit 250 are switched on, an electrical connection between the power source node 120 and the fuel safety shutoff valve 110 is established, supplying fuel into the fuel cell system 10a. All the switch units 210 to 240 will be switched on when all the environmental conditions associated with the safety of the fuel cell system 10a meet respective safety requirements.

However, when at least one of the environmental conditions fails to meet a corresponding requirement, the corresponding switch unit becomes switched off and the electrical connection between the power source node 120 and the fuel safety shutoff valve 1 10 is deactivated, thus shutting off the supplying of fuel into the fuel cell system 10a.

In one embodiment, as illustrated in FIG. 3, the switching assembly 21a provides feedback signals FS1 to FS5, each of which indicates an operation status of a corresponding one of the switch units 210 to 240 and 260. Thus, based on the feedback signals FS1 to FS5, a system or a user may determine whether a failure occurs in the linear chain of the switch units 210 to 240 and 260 and/or where the failure occurs. This feature aids in the system or user to troubleshoot in case of occurrence of failure. In one embodiment, the switching assembly 21a includes a troubleshoot section 290. The troubleshoot section 290 may receive the feedback signals FS1 to FS5. The troubleshoot section 290 may include a memory (not shown) storing information collected regarding the feedback signals FS1 to FS5; display the information to a user; and/or process the collected information using one or more processors (not shown) to find out locations being failed.

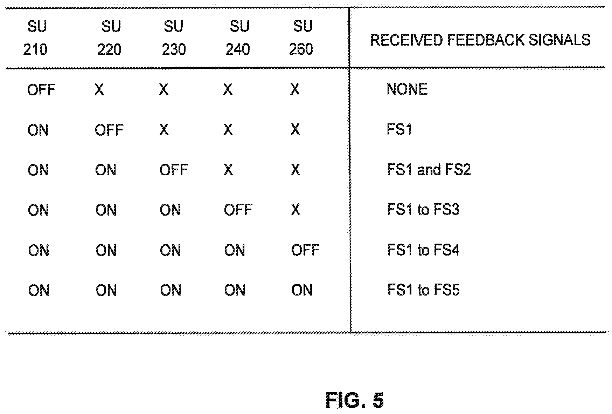

As further illustrated in FIGS. 3 and 5, if the switch unit 210 is switched off, none of the feedback signals FS1 to FS5 is provided, regardless respective switching statuses of the following other switch units 220 to 240 and 260, because no electric current can flow through the switch unit 210. The character "X" illustrated in FIG. 5 represents a case that a switching status of a corresponding switch unit can be either switched on or switched off. In addition, if the switch unit 210 is switched on and the switch unit 220 is switched off, the feedback signal FS1 is provided, but none of the FS2 to FS5 is provided, regardless respective switching statuses of the following other switch units 230, 240 and 260, because no electric current can flow through the switch unit 220. Similarly, if the switch units 210 and 220 are switched on and the switch unit 230 is switched off, the feedback signals FS1 and FS2 are provided, but none of the FS3 to FS5 is provided, regardless respective switching statuses of the following other switch units 240 and 260, because no electric current can flow through the switch unit 230. In addition, if the switch units 210 to 230 are switched on and the switch unit 240 is switched off, the feedback signals FS1 to FS3 are provided, but none of the FS4 and FS5 is provided, regardless respective switching statuses of the following other switch unit 260, because no electric current can flow through the switch unit 240. Further, the switch units 210 to 240 are switched on and the switch unit 260 is switched off, the feedback signals FS1 to FS4 are provided, but the signal FS5 is not provided, because no electric current can flow through the switch unit 260. Finally, the switch units 210 to 240 and 260 are switched on, the feedback signals FS1 to FS5 are provided.

Thus, by way of example only, upon receiving none of the signals FS1 to FS5, the processor (not shown) of the troubleshooting section 290 or a user may determine that the switch unit 210 is switched off, and thus may check parts (e.g., 30a of FIG. 2B) associated with the air flow rate. Similarly, upon receiving only the signal FS1, the processor or the user may determine that the switch unit 220 is switched off, and thus may check parts (e.g., 31a or 31b of FIG. 2B) associated with the differential pressure. Further, upon receiving only the signals FS1 and FS2, the processor or the user may determine that the switch unit 230 is switched off, and thus may check parts (e.g., 44 of FIG. 2B) associated with the over-temperature at, e.g., the location 44. Still further, upon receiving only the signals FS1 to FS3, the processor or the user may determine that the switch unit 240 is switched off, and thus may check parts (e.g., 34 of FIG. 2B) associated with the over-temperature at, e.g., the location 34. Still yet further, upon receiving only the signals FS1 to FS4, the processor or the user may determine that the switch unit 260 and the time-delay unit 250 are switched off, and thus may check parts (e.g., 32 of FIG. 2B) associated with the afterburner temperature and/or the time-delay unit 250 itself. Finally, upon receiving all the signals FS1 to FS5, the processor or the user may determine that the fuel cell system 10a operates, meeting all the environment requirements with regard to the safety of the fuel-consuming apparatus 10a.

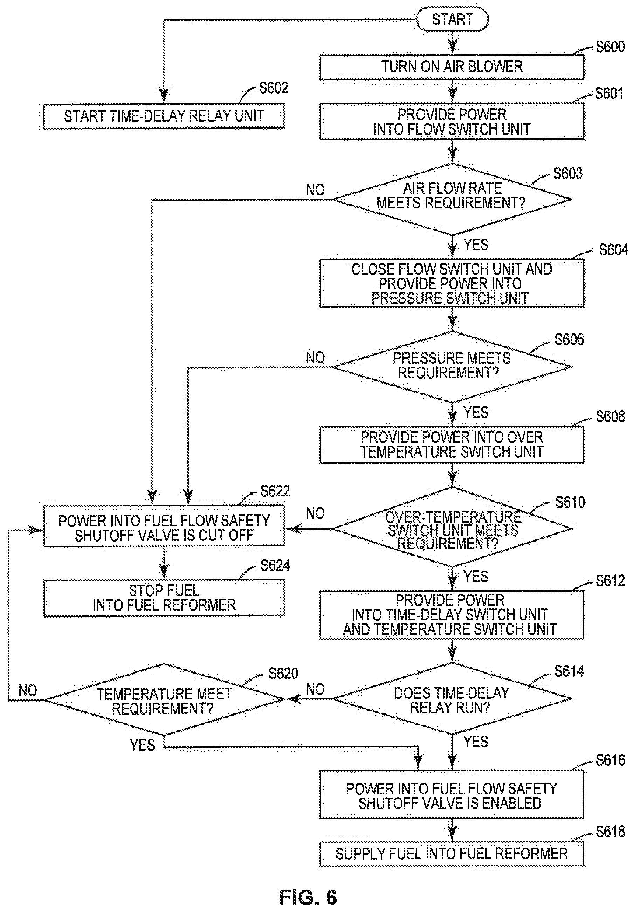

FIG. 6 is a flow chart illustrating a safety control method for a fuel cell system 10a according to an embodiment of the present disclosure.

Referring now to FIGS. 3 and 6, the safety control method includes: turning on an air blower (e.g., 730) (S600); and providing power into an input node (e.g., N1 of FIG. 3) of a flow switch unit (e.g., 210) from a power source node (e.g., 120) (S601). In addition, it is determined at the flow switch unit if an air flow rate associated with the dilution air amount at a certain location (e.g., 30a of FIG. 2B) of the fuel cell system 10a meets a preset flow rate requirement (S603). In one embodiment, independent from the step S601, the method includes starting an operation of the time-delay relay unit (e.g., 250) at T1 (see FIG. 4A) to activate an electrical connection between both terminal ends (e.g., N5 and N6) thereof (S602). The time-delay of the time-delay relay unit will end at T2 (see FIG. 4A) to disactivate the connection between the terminal ends (e.g., N5 and N6). In one embodiment, the preset flow rate requirement includes that an air flow rate at the location (e.g., 30a) is higher than a preset air flow rate threshold. If the air flow rate meets the preset air flow rate requirement (YES), the flow switch unit (e.g., 210 is switched on and the power supplied from the power source node 120 is advanced into an input node (e.g., N3) of a pressure switch unit (e.g., 230) (S604). If the air flow rate does not meet the preset flow amount requirement (NO), the flow switch unit is switched off and the power into the fuel safety shutoff is cut off (S622) and the supplying of the fuel into the fuel cell system 10a stops (S624).

Further, the method includes a step S606 where it is determined at the pressure switch unit if a differential pressure between certain locations (e.g., 31a and 31b of FIG. 2B) of the fuel cell system10a meets a preset pressure requirement. In one embodiment, the preset pressure requirement includes that a differential pressure between two separated locations (31a and 31b) is lower than a preset differential pressure threshold.

If the sensed pressure meets the preset pressure requirement (YES), the pressure switch unit is switched on and the power is advanced into an input node (e.g., N4) of an over-temperature switch unit (e.g., 230) (S608). If the sensed pressure does not meet the pressure requirement (YES), the pressure switch unit is switched off and the power into the fuel safety shutoff valve 110 is cut off (S622) and the supplying of the fuel into the fuel cell system 10a stops (S624).

Still further, the method includes a step S610 where it is determined at the over-temperature switch unit if a temperature at a certain location (e.g., 34 of FIG. 2B) of the fuel cell system 10a meets a preset temperature requirement. In one embodiment, the preset temperature requirement includes that a temperature sensed at the location (e.g., 34 or 44) is less than a preset temperature threshold.

The location 44 may be where the fuel cell system 10a exhausts hot exhaust/dilution air mix before the exhaust/dilution air mix leaves the box of the fuel cell system 10a. The location 34 may correspond to an inlet manifold to the CPOX unit 195.

For example, the preset temperature threshold may be set to be 90 °C in consideration of a specific temperature limitation on materials. However, the preset temperature threshold can be lowered up to, e.g., 80 °C for safety touch hazard where a temperature should be kept below 80 °C for sheet metal and even lower for other materials depending on how fast they could transfer heat to skin.

If the sensed temperature meets the preset temperature requirement (YES), the over-temperature switch unit is switched on and the power is advanced into an input node (e.g., N5) of an afterburner switching section including the time-delay relay unit 250 and the temperature switch unit 260 (S612). If the sensed temperature does not meet the preset temperature requirement (NO); e.g., if the temperature is equal to or higher than the preset temperature threshold, the over-temperature switch unit is switched off and the power into the fuel safety shutoff valve 110 is cut off (S622) and the supplying of the fuel into the fuel cell system 10a stops (S624).

Still yet further, the method further includes determining if the time delay by the time-delay relay unit 250 still runs or not (S614). If the time delay runs (YES), the method goes to a step S616 of providing the power into a power input node (e.g., N110 of FIG. 2B) of the fuel safety shutoff valve 110 and a step S618 of supplying the fuel into the fuel cell system 10a. However, if the time delay by the time-delay relay unit does not run (NO), the method goes to a step S620 to determine if a temperature of the afterburner unit 1 80 meets a preset afterburner temperature requirement. In one embodiment, the preset afterburner temperature requirement includes that the afterburner temperature is equal to or more than a preset afterburner temperature threshold (e.g., auto-ignition temperature). If the sensed afterburner temperature meets the preset afterburner temperature requirement (YES), the method goes to the steps S616 and S618 to supply the fuel into the fuel cell system 10a. In addition, if the sensed afterburner temperature does not meet the preset afterburner temperature requirement (NO), the method goes to the steps S622 and S624 to stop the supplying of the fuel into the fuel cell system 10a.

The present disclosure encompasses embodiments in other specific forms without departing from the scope of the attached claims. The foregoing embodiments are therefore to be considered in all respects illustrative rather than limiting on the present disclosure described herein. Scope of the present invention is thus indicated by the appended claims rather than by the foregoing description, and all changes that come within the meaning and range of equivalency of the claims are intended to be embraced therein.

## Claims

1. A safety control system (20, 20a) for a fuel-consuming apparatus (10, 10a), comprising:
a first end electrically connectable to a power source node (120);
a second end electrically connectable to an input power node (N110) of a fuel safety shutoff valve (110) of the fuel-consuming apparatus;
one or more switch units (210-240) serially connected between the first and second ends, each of the switch units being configured to be switched on or off based on a corresponding one of one or more environmental conditions of the fuel-consuming apparatus, wherein an electrical connection path between the first and second ends is deactivated upon at least one of the one or more switch units being switched off to stop supplying of fuel into the fuel-consuming apparatus; and **characterised by** comprising:
a time-delay relay unit (250) serially connected to one of the one or more switch units, the time-delay relay unit being configured to be switched on during a predetermined time period from a first time to a second time and switched off after the second time; and
a temperature switch unit (260) serially connected to said one of the one or more switch units and connected in parallel to the time-delay relay unit, the temperature switch unit being configured to be switched on or switched off based on a temperature of an afterburner unit of the fuel-consuming apparatus.

2. The safety control system of claim 1, wherein the one or more switch units are implemented with one or more electro-mechanical switches.

3. The safety control system of claim 2, wherein the temperature switch unit is configured to be switched on upon the temperature of the afterburner unit exceeding a preset afterburner temperature threshold.

4. The safety control system of claim 2, wherein when all of the switch units are switched on and the time-delay relay unit is switched on, the electrical connection path between the first and second ends is activated to provide electric power from the power source node into the fuel safety shutoff valve.

5. The safety control system of claim 2, wherein when all of the switch units are switched on and the time-delay relay unit is switched off, the electrical connection path between the first and second ends is activated upon the temperature switch unit being switched on and deactivated upon the temperature switch unit being switched off.

6. The safety control system of claim 5, wherein when all of the switch units are switched on, the time-delay relay unit is switched off and the temperature switch unit is switched on before the second time, the electrical connection path between the first and second ends remains activated without disconnection

7. The safety control system of claim 5, wherein when all of the switch units are switched on, the time-delay relay unit is switched off and the temperature switch unit is switched on at a third time after the second time, the electrical connection path is deactivated during a period between the second time and the third time; and is reactivated after the third time.

8. The safety control system of claim 1, wherein the one or more environmental conditions comprise an air flow amount, a pressure and a temperature.

9. The safety control system of claim 1, wherein a flow switch unit of the one or more switch units includes a first electro-mechanical switch configured to be switched on or switched off based on whether an air flow rate sensed at a first location of the fuel-consuming apparatus meets a first preset requirement.

10. The safety control system of claim 1, wherein a pressure switch unit of the one or more switch units includes a second electro-mechanical switch configured to be switched on or switched off based on whether a differential pressure between two separated locations of the fuel-consuming apparatus meets a second preset requirement.

11. The safety control system of claim 10, wherein the two separated locations correspond to inlet and outlet locations of a blower of the fuel-consuming apparatus, respectively.

12. The safety control system of claim 1, wherein an over-temperature switch unit of the one or more switch unit includes a third electro-mechanical switch configured to be switched on or switched off based on whether a temperature sensed at a third location of the fuel-consuming apparatus meets a third preset requirement.

13. The safety control system of claim 1, wherein the third preset requirement comprises the temperature sensed at the third location being higher than a preset temperature threshold.

14. A fuel-consuming apparatus comprising the safety control system of claim 1, the fuel-consuming apparatus further comprising one or more of a fuel combustion apparatus, a fuel reformer and a fuel cell system, wherein the fuel comprises a liquid fuel and a gaseous fuel.

## Patentansprüche

1. Ein Sicherheitssteuersystem (20, 20a) für ein Kraftstoffverbrauchsgerät (10, 10a), umfassend
ein erstes Ende, das elektrisch mit einem Stromquellenknoten (120) verbunden werden kann;
ein zweites Ende, das elektrisch mit einem Eingangsstromknoten (N110) eines Kraftstoffsicherheitsabsperrventils (110) des Kraftstoffverbrauchsgeräts verbunden werden kann;
eine oder mehrere Schaltereinheiten (210-240), die in Reihe zwischen dem ersten und dem zweiten Ende angeordnet sind, wobei jede der Schaltereinheiten so konfiguriert ist, dass sie basierend auf einer entsprechenden von einer oder mehreren Umgebungsbedingungen des Kraftstoffverbrauchsgeräts ein- oder ausgeschaltet wird,
wobei ein elektrischer Verbindungspfad zwischen dem ersten und dem zweiten Ende deaktiviert wird, wenn mindestens eine der einen oder mehreren Schaltereinheiten ausgeschaltet wird, um die Zufuhr von Kraftstoff in das Kraftstoffverbrauchsgerät zu stoppen;
**dadurch gekennzeichnet, dass** es:
eine Zeitverzögerungs-Relaiseinheit (250) enthält, die in Reihe mit einer der einen oder mehreren Schalteinheiten verbunden ist, wobei die Zeitverzögerungs-Relaiseinheit so konfiguriert ist, dass sie während einer vorbestimmten Zeitspanne von einem ersten Zeitpunkt bis zu einem zweiten Zeitpunkt eingeschaltet und nach dem zweiten Zeitpunkt ausgeschaltet wird; und
eine Temperaturschalteinheit (260) umfasst, die in Reihe mit der einen oder mehreren Schalteinheiten und parallel mit der Zeitverzögerungsrelaiseinheit verbunden ist, wobei die Temperaturschalteinheit so konfiguriert ist, dass sie basierend auf der Temperatur einer Nachbrennereinheit des Kraftstoffverbrauchsgeräts ein- oder ausgeschaltet wird.

2. Das Sicherheitssteuersystem nach Anspruch 1, wobei die eine oder mehreren Schaltereinheiten mit einem oder mehreren elektromechanischen Schaltern ausgestattet sind

3. Das Sicherheitssteuersystem nach Anspruch 2, wobei die Temperaturschalteinheit so konfiguriert ist, dass sie eingeschaltet wird, wenn die Temperatur der Nachbrennereinheit einen voreingestellten Nachbrennertemperaturschwellenwert überschreitet.

4. Das Sicherheitssteuersystem nach Anspruch 2, wobei, wenn alle Schalteinheiten sowie die Zeitverzögerungsrelaiseinheit eingeschaltet sind, der elektrische Verbindungspfad zwischen dem ersten und dem zweiten Ende aktiviert wird, um elektrische Energie vom Stromquellenknoten in das Kraftstoffsicherheitsabsperrventil einzuspeisen.

5. Das Sicherheitssteuersystem nach Anspruch 2, wobei, wenn alle Schalteinheiten eingeschaltet und die Zeitverzögerungsrelaiseinheit ausgeschaltet ist, der elektrische Verbindungspfad zwischen dem ersten und dem zweiten Ende beim Einschalten der Temperaturschalteinheit aktiviert und beim Ausschalten der Temperaturschalteinheit deaktiviert wird.

6. Das Sicherheitssteuersystem nach Anspruch 5, wobei, wenn alle Schalteinheiten eingeschaltet sind, die Zeitverzögerungsrelaiseinheit ausgeschaltet wird und die Temperaturschalteinheit vor dem zweiten Mal eingeschaltet wird, der elektrische Verbindungspfad zwischen dem ersten und dem zweiten Ende ohne Unterbrechung aktiviert bleibt.

7. Das Sicherheitssteuersystem nach Anspruch 5, wobei, wenn alle Schalteinheiten eingeschaltet sind, die Zeitverzögerungsrelaiseinheit ausgeschaltet wird und die Temperaturschalteinheit zu einem dritten Zeitpunkt nach dem zweiten Zeitpunkt eingeschaltet wird, der elektrische Verbindungspfad während eines Zeitraums zwischen dem zweiten und dem dritten Zeitpunkt deaktiviert wird und nach dem dritten Zeitpunkt wieder aktiviert wird.

8. Das Sicherheitssteuersystem nach Anspruch 1, wobei die eine oder mehreren Umgebungsbedingungen eine Luftströmungsmenge, einen Druck und eine Temperatur umfassen.

9. Das Sicherheitssteuersystem nach Anspruch 1, wobei eine Strömungsschaltereinheit der einen oder mehreren Schaltereinheiten einen ersten elektromechanischen Schalter umfasst, der so konfiguriert ist, dass er basierend darauf ein- oder ausgeschaltet wird, ob eine an einer ersten Stelle des Kraftstoffverbrauchsgeräts erfasste Luftströmungsrate einer ersten voreingestellten Anforderung entspricht.

10. Das Sicherheitssteuersystem nach Anspruch 1, wobei eine Druckschaltereinheit der einen oder mehreren Schaltereinheiten einen zweiten elektromechanischen Schalter umfasst, der so konfiguriert ist, dass er basierend darauf ein- oder ausgeschaltet wird, ob ein Differenzdruck zwischen zwei getrennten Stellen des Kraftstoffverbrauchsgeräts einer zweiten voreingestellten Anforderung entspricht.

11. Das Sicherheitssteuersystem nach Anspruch 10, wobei die beiden getrennten Stellen Einlass- bzw. Auslassorten eines Gebläses des Kraftstoffverbrauchsgerät entsprechen.

12. Das Sicherheitssteuersystem nach Anspruch 1, wobei eine Übertemperatur-Schalteinheit der einen oder mehreren Schalteinheiten einen dritten elektromechanischen Schalter umfasst, der so konfiguriert ist, dass er basierend darauf ein- oder ausgeschaltet wird, ob eine an einer dritten Stelle des Kraftstoffverbrauchsgeräts erfasste Temperatur einer dritten voreingestellten Anforderung entspricht.

13. Das Sicherheitssteuersystem nach Anspruch 1, wobei die dritte voreingestellte Anforderung darin besteht, dass die an der dritten Stelle erfasste Temperatur höher als ein voreingestellter Temperaturschwellenwert ist.

14. Kraftstoffverbrauchsgerät umfassend das Sicherheitssteuersystem nach Anspruch 1, umfassend weiterhin eine oder mehrere Brennstoffverbrennungsvorrichtungen, einen Brennstoffreformer und ein Brennstoffzellensystem, wobei der Brennstoff einen flüssigen Brennstoff und einen gasförmigen Brennstoff umfasst.

## Revendications

1. Système de commande de sécurité (20, 20a) pour un appareil de consommation de carburant (10, 10a), comprenant :
une première extrémité électriquement connectable à un noeud de source d'électricité (120) ;
une seconde extrémité électriquement connectable à une noeud d'électricité d'entrée (N110) d'une soupape d'arrêt de sécurité de carburant (110) de l'appareil de consommation de carburant ;
une ou plusieurs unités de commutateur (210-240) connectées en série entre les première et seconde extrémités, chacune des unités de commutateur étant configurée pour être allumée ou éteinte sur la base d'une correspondante d'une ou de plusieurs conditions d'environnement de l'appareil de consommation de carburant,
dans lequel un chemin de connexion électrique entre les première et seconde extrémités est désactivé lorsqu'au moins une de l'une ou des plusieurs unités de commutateur est éteinte pour arrêter l'alimentation en carburant dans l'appareil de consommation de carburant ; et **caractérisé en ce qu'**il comprend :
une unité de relais temporisée (250) connectée en série à une de l'une ou des plusieurs unités de commutateur, l'unité de relais temporisée étant configurée pour être allumée durant une période prédéterminée depuis un premier instant jusqu'à un deuxième instant et éteinte après le deuxième instant ; et
une unité de commutateur de température (260) connectée en série à ladite une de l'une ou des plusieurs unités de commutateur et connectée en parallèle à l'unité de relais temporisée, l'unité de commutateur de température étant configurée pour être allumée ou éteinte sur la base d'une température d'une unité de post-combustion de l'appareil de consommation de carburant.

2. Système de commande de sécurité de la revendication 1, dans lequel l'une ou les plusieurs unités de commutateur sont mises en oeuvre avec un ou plusieurs commutateurs électromécaniques.

3. Système de commande de sécurité de la revendication 2, dans lequel l'unité de commutateur de température est configurée pour être allumée lorsque la température de l'unité de post-combustion dépasse un seuil de température de post-combustion prédéfini.

4. Système de commande de sécurité de la revendication 2, dans lequel, lorsque la totalité des unités de commutateur sont allumées et l'unité de relais temporisée est allumée, le chemin de connexion électrique entre les première et seconde extrémités est activé pour fournir de l'énergie électrique, depuis le noeud de source d'électricité, dans la soupape d'arrêt de sécurité de carburant.

5. Système de commande de sécurité de la revendication 2, dans lequel, lorsque la totalité des unités de commutateur sont allumées et l'unité de relais temporisée est éteinte, le chemin de connexion électrique entre les première et seconde extrémités est activé lorsque l'unité de commutateur de température est allumée et désactivé lorsque l'unité de commutateur de température est éteinte.

6. Système de commande de sécurité de la revendication 5, dans lequel, lorsque la totalité des unités de commutateur sont allumées, l'unité de relais temporisée est éteinte et l'unité de commutateur de température est allumée avant le deuxième instant, le chemin de connexion électrique entre les première et seconde extrémités reste activé sans déconnexion.

7. Système de commande de sécurité de la revendication 5, dans lequel, lorsque la totalité des unités de commutateur sont allumées, l'unité de relais temporisée est éteinte et l'unité de commutateur de température est allumée à un troisième instant après le deuxième instant, le chemin de connexion électrique est désactivé durant une période entre le deuxième instant et le troisième instant ; et est réactivé après le troisième instant.

8. Système de commande de sécurité de la revendication 1, dans lequel l'une ou les plusieurs conditions d'environnement comprennent une quantité de débit d'air, une pression et une température.

9. Système de commande de sécurité de la revendication 1, dans lequel une unité de commutateur de débit de l'une ou des plusieurs unités de commutateur inclut un premier commutateur électromécanique configuré pour être allumé ou éteint sur la base du fait qu'un débit d'air détecté à un premier emplacement de l'appareil de consommation de carburant satisfait ou non à une première condition prédéfinie.

10. Système de commande de sécurité de la revendication 1, dans lequel une unité de commutateur de pression de l'une ou les plusieurs unités de commutateur inclut un deuxième commutateur électromécanique configuré pour être allumé ou éteint sur la base du fait qu'une pression différentielle entre deux emplacements séparés, de l'appareil de consommation de carburant, satisfait ou non à une deuxième condition prédéfinie.

11. Système de commande de sécurité de la revendication 10, dans lequel les deux emplacements séparés correspondent à des emplacements d'entrée et de sortie d'une soufflante de l'appareil de consommation de carburant, respectivement.

12. Système de commande de sécurité de la revendication 1, dans lequel une unité de commutateur de température excessive de l'une ou des plusieurs unités de commutateur inclut un troisième commutateur électromécanique configuré pour être allumé ou éteint sur la base du fait qu'une température détectée à un troisième emplacement de l'appareil de consommation de carburant satisfait ou non à une troisième condition prédéfinie.

13. Système de commande de sécurité de la revendication 1, dans lequel la troisième condition prédéfinie comprend le cas où la température détectée au troisième emplacement est supérieure à un seuil de température prédéfini.

14. Appareil de consommation de carburant comprenant le système de commande de sécurité de la revendication 1, l'appareil de consommation de carburant comprenant en outre un ou plusieurs parmi un appareil de combustion de carburant, un reformeur de carburant et un système de pile à carburant, dans lequel le carburant comprend un carburant liquide et un carburant gazeux.
